# EUROPÄISCHE PATENTSCHRIFT

(11) **EP 0 714 844 B1**
(45) Veröffentlichungstag und Bekanntmachung des Hinweises auf die Patenterteilung: **24.05.2000**
(21) Anmeldenummer: 95117753.4
(22) Anmeldetag: 10.11.1995
(51) Int. Cl.: B65H 29/04, B65G 17/32

(54) **Vorrichtung für die Freigabe von Falzprodukten**
Device for releasing folded products
Dispositif pour libérer des produits pliés

(30) Priorität: 02.12.1994 US 349110
(43) Veröffentlichungstag der Anmeldung: 05.06.1996
(73) Patentinhaber: Heidelberger Druckmaschinen Aktiengesellschaft, 69115 Heidelberg (DE)
(72) Erfinder: Cote, Kevin Lauren, Durham, NH 03824 (US); Curley, Richard Daniel, Haverhill, MA 01864 (US)
(74) Vertreter: Fey, Hans-Jürgen

(56) Entgegenhaltungen:
- EP-A- 0 541 499
- WO-A-96/06032
- US-A- 3 713 648

## Beschreibung

Die vorliegende Erfindung betrifft eine Vorrichtung für die Freigabe von auf einem Förderer transportierten Falzprodukten.

Das U.S.-A-4,767,112 offenbart eine Vorrichtung für die Aufnahme und den Weitertransport von Falzprodukten. Arme mit jeweils einem Greifer sind an einer Transportkette befestigt. Diese Arme werden veranlaßt, an einer Falzprodukt-Übergabestation ihre lineare Bewegung in eine bogenförmige Bewegung zu ändern, was eine Geschwindigkeitsverminderung zur Folge hat. Nach der übernahme der Falzprodukte durch die Greifer der Arme, die durch einen ortsfesten Exzenter gesteuert werden, beginnen die Kettenglieder der Transportkette sich zwischen zwei Führungsschienen zu bewegen. An der ersten Führungsschiene ist ein weiterer Exzenter angeordnet, durch welchen der Greifer eines jeden Armes veranlaßt wird, sich zu öffnen, wenn dieser sich über einer Falzprodukt-übergabestation befindet.

Das U.S.-A-4,775,136 offenbart ein Produktfalz- und -transportsystem, wobei die Produkte in individuelle Kammern des Transportsystems eingefügt werden können. Über diesem Produkttransportsystem ist eine rotierende Kette vorgesehen, deren sich nach außen erstreckende Vorsprünge ein einheitliches öffnen der individuellen Kammern des Transportsystems bewirken. In die auf diese Weise geöffneten Kammern werden die Produkte eingefügt, wobei deren ursprünglich noch nicht vollständig geformter Falzrücken vor deren Eintritt in die jeweilige Kammer vervollkommnet wird. Zu diesem Zweck sind rotierende Spreizelemente rund um die rotierende Kette angeordnet.

Das U.S.-A-4,828,242 zeigt ein weiteres Transportsystem für Falzprodukte. Es werden eine Vielzahl von miteinander verbundenen Segmenten nacheinander auf einer Führungsschiene weitertransportiert, indem untere Vorsprünge einzelne Segmentkanten kontaktieren. Da die Vorsprünge an den rotierenden Ketten sich in einem gleichen Abstand voneinander befinden, wird der Abstand der transportierten Produkte zueinander entsprechend aufrechterhalten. Es kann jedoch auch der Abstand der einzelnen Segmente zuneinander durch einen Endloszahnriemen, welcher unterhalb einer Führungsschiene rotiert und worauf die einzelnen Segmente beweglich angeordnet sind, gleichmäßig aufrechterhalten werden.

U.S.-A-4,678,174 offenbart eine Vorrichtung für die Aufnahme und den Weitertransport gefalzter Produkte. Mittels dieser Vorrichtung können die offenen Enden der Produkte während des Transport in Hängeposition offen bleiben, oder die Produkte können transportiert werden, wobei sich ihr offener Zustand in einen geschlossenen Zustand ändert. Es wird nicht erwähnt, daß eine unterschiedliche Ablage der Falzprodukte an verschiedenen Auslagestellen erfolgt.

EP-A-0 541 499 zeist eine Vorrichtung gemäß dem Oberbegriff von Anspruch 1, wobei eine Freigabeeinheit mit rotierenden Gliedern vorgesehen ist und eine Freigabe der Produkte mittels individuell aktivierbarer und mit rotierender Auslöse elemente erfolgt.

Es besteht ein Bedürfnis, Falzprodukte, welche in einem Falzapparat bearbeitet wurden, aus diesem herausbefördern und an verschiedene Auslagestellen richten zu können. Zum Beispiel kann in Abhängigkeit des auf dem Druckzylinder eines jeweiligen Druckwerks einer vorlaufenden Rotationsdruckmaschine gedruckten Druckbildes und in Abhängigkeit der Falzart des Druckprodukts jedes zweite oder dritte Exemplar des Produktstroms identisch sein. Somit entsteht das Bedürfnis, die identischen Produkte an einer Stelle zu sammeln, wo weitere Verarbeitung - z. B. das Hinzufügen von Einlagen zu diesen identischen Produkten - stattfinden kann.

Gemäß einer Ausgestaltung der vorliegenden Erfindung, umfaßt eine Vorrichtung für das Freigeben von Falzprodukten in einer Transporteinrichtung einen Förderer, welcher identische Produkthalter transportiert, und eine Freigabeeinheit mit rotierenden Gliedern, an welchen schwenkbare Blöcke befestigt sind. Die schwenkbaren Blöcke sind mit Vorsprüngen versehen, welche verschiedene Positionen an den Blöcken einnehmen. Die Blöcke können in verschiedene Blocktypen aufgeteilt sein, wobei jeder Blocktyp eine andere Anordnung der Vorsprünge aufweist. Die Freigabeeinheit umfaßt ferner Rampen, die wahlweise zwischen einer Aktiv-Position und einer Nicht-aktiv-Position bewegt werden können. Die Rampen sind relativ zu den schwenkbaren Blöcken in einer Weise angeordnet, daß, wenn aktiviert, die jeweilige Rampe auf die Vorsprünge eines oder mehrerer der gewählten Blocktypen wirkt, wobei die übereinstimmenden, sich unterhalb der gewählten Blöcke bewegenden Produkthalter veranlaßt werden, ihr Produkt freizugeben.

In dieser Weise wird bei der vorliegenden Erfindung auf Hochgeschwindigkeitssteuerungen zur Aktivierung der einzelnen Produkthalter verzichtet, wodurch eine Senkung der Herstellungskosten erbracht ist. Die vorliegende Erfindung funktioniert wie folgt:
Ein Förderer, der identische Produkthalter trägt, passiert die Freigabeeinheit. Die Freigabeeinheit weist schwenkbare Blöcke auf, welche an rotierenden Gliedern einer Kette angebracht sind. Beim Passieren der Produkthalter vorbei an der Freigabeeinheit wird einem jeden identischen Produkthalter ein Block zugeordnet. Die Freigabeeinheit weist eine Vielzahl von wahlweise aktivierbaren Rampen auf, und die Blöcke weisen einen oder mehrere von Vorsprüngen auf, die mit einer oder mehreren der Rampen übereinstimmen. Wenn ein Block mit einem Vorsprung, welcher mit einer aktivierten Rampe übereinstimmt, vorbei an dieser Rampe passiert, schwenkt der Block, wodurch der diesem Block zugeordnete Produkthalter sein Produkt freigibt. Die Blöcke mit Vorsprüngen, welche mit keiner aktivierten Rampe übereinstimmen, schwenken nicht, und deren zugeordnete Produkthalter geben ihr Produkt nicht frei. Somit wird z. B. jeder zweite oder jeder dritte Produkthalter beim Passieren vorbei an der Freigabeeinheit sein Produkt freigeben. Auf diese Weise können von identischen Produkthaltern getragene Produkte entsprechend den Auslage- oder Ablageanforderungen von dem Produktstrom getrennt werden.

Gemäß einer anderen Ausgestaltung der vorliegenden Erfindung kann die Länge der wahlweise aktivierbaren Rampen variiert werden, um die Zeitspanne des Offenseins der Produkthalter zu steuern, d. h., je kürzer die zu aktivierende Rampe ist, desto kürzer ist die Zeitspanne der Offenseins des Produkthalters. Ferner können die aktivierbaren Rampen nicht nur nebeneinander, sondern auch hintereinander angeordnet sein.

Außerdem können die wahlweise aktivierbaren Rampen durch mit einem Druckmedium versorgte Einheiten aktiviert werden, e.g. durch Elektromagnetismus, durch einen elektrischen Motor oder durch ein Hebelgestänge.

Gemäß einer weiteren Ausführung der vorliegenden Erfindung sind die Blöcke durch Schwenkachsen mit Rückschlagelementen an den rotierenden Gliedern angebracht, so daß die Blöcke nicht zufolge ihres Eigengewichts schwenken können. Wenn also ein bestimmter Block schwenkt, dann nur, wenn dieser unter einer aktivierten Rampe passiert, die mit einem der Vorsprünge an diesem bestimmten Block übereinstimmt.

Die schwenkbaren Blöcke können in mehrere Blocktypen eingeteilt sein, wobei jeder Block eine andere Anordnung der Vorsprünge aufweist. Zum Beispiel könnte ein erster Blocktyp mittlere und erste äußere Vorsprünge haben, ein zweiter Blocktyp könnte nur zweite äußere Vorsprünge haben, ein dritter Blocktyp könnte nur erste äußere Vorsprünge haben, und ein vierter Blocktyp könnte mittlere und zweite äußere Vorsprünge haben.

In Fortsetzung dieses Beispiels würde die Aktivierung einer wahlweise aktivierbaren Rampe, die mit dem zweiten äußeren Vorsprung übereinstimmt, die Blöcke des zweiten und des vierten Typs zum Rotieren bringen. Die Aktivierung einer zweiten wahlweise aktivierbaren Rampe, die mit dem ersten äußeren Vorsprung übereinstimmt, würde die Blöcke des ersten und des dritten Typs zum Rotieren bringen. Die Aktivierung einer dritten wahlweise aktivierbaren Rampe, die mit dem mittleren Vorsprung übereinstimmt, würde die Blöcke des ersten und des vierten Typs zum Rotieren bringen.

Durch die Aktivierung einer oder mehrerer der Rampen ist es möglich, die Produkthalter in unterschiedlichen Kombinationen zur Freigabe ihrer Produkte bei deren Passieren unterhalb der Freigabeeinheit zu veranlassen. Es ist z. B. möglich, jeden zweiten oder jeden dritten, die Freigabeeinheit passierenden Produkthalter zur Freigabe zu veranlassen. Es ist auch möglich, eine gewisse Anzahl von Rampen zu aktivieren, so daß jeder die Freigabeeinheit passierende Produkthalter sein Produkt freigibt, wobei eine laufende Produktauslage an einer einzelnen Station stattfinden kann.

Die vorliegende Erfindung wird durch die folgende Beschreibung eines Ausführungsbeispiels im Zusammenhang mit den beigefügten, nachstehend erklärten Zeichnungen näher erläutert.

Es zeigen:
- Fig. 1: eine Seitenansicht einer sich über einem Förderer befindlichen Freigabeeinheit gemäß vorliegender Erfindung;
- Fig. 2: eine Draufsicht von der Länge nach sich erstreckenden, wahlweise betätigbaren Rampen der Fig. 1; und
- Fig. 3: eine Darstellung der Betätigung der Freigabeeinheit zum Zweck der wahlweise betätigbaren Rampen der Fig. 1 und 2.

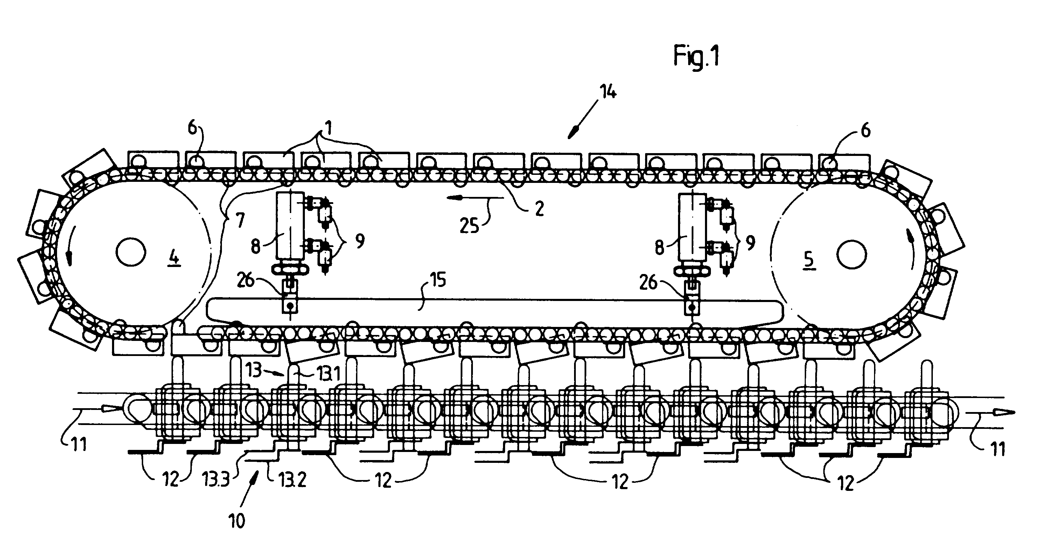

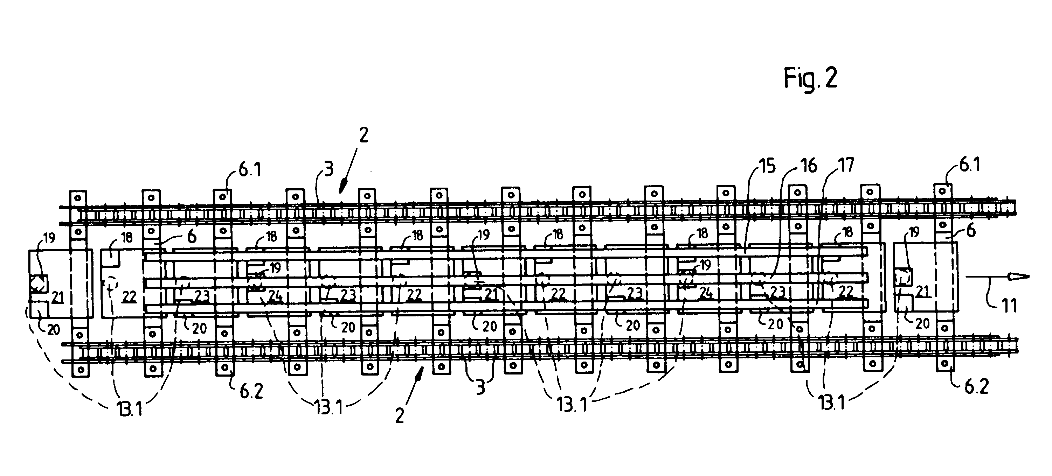

Fig. 1 zeigt eine Seitenansicht einer Freigabeeinheit 14 über einem endlosen Förderer 10. Die Freigabeeinheit 14 umfaßt rotierende Glieder 2, welche auf Achsen 6 gelagerte schwenkbare Blöcke halten. Die rotierenden Glieder 2, in Fig. 1 als eine Kette dargestellt, bewegen sich um Kettenräder 4 und 5. Wie in Fig. 1 dargestellt, sind Aktiviereinheiten 8 zwischen den Kettenrädern 4 und 5 vorgesehen. Jede der Aktiviereinheiten 8 ist mit Schaltungen 9 versehen. Die Aktiviereinheiten 8 sind für die Anwendung eines Druckmediums konstruiert. Somit könnten die Aktiviereinheiten 8 pneumatische Zylinder oder auch hydraulische Zylinder sein. Alternativ könnten die Aktiviereinheiten 8 elektromagnetisch oder in Verbindung mit einem elektrischen Motor funktionieren. Sogar eine Hebelstange könnte verwendet werden. Die Aktiviereinheiten 8 sind durch Verbindungsstücke 26 mit den in Fig. 2 vollständig gezeigten, wahlweise betätigbaren Rampen 15, 16 und 17 verbunden.

Jeder schwenkbare Block 1 ist mit seiner jeweiligen Achse auf dem rotierenden Glied 2 gelagert und hat einen jeweiligen Vorsprung 18, 19 oder 20. Der Einfachheit halber ist nur der Vorsprung 18 in Fig. 1 dargestellt. Diese Vorsprünge 18, 19 oder 20 bewirken ein Abschwenken bestimmter der schwenkbaren Blöcke 1 während diese unterhalb der wahlweise betätigbaren Rampen 15, 16 und 17 passieren, je nachdem welche Vorsprünge von den Rampen kontaktiert werden.

In der in den Fig. 1 und 2 gezeigten Ausgestaltung der vorliegenden Erfindung weist jeder Block 1 eine Bohrung auf, worin die jeweilige Achse 6 gelagert ist. Somit kann sich jeder Block 1 frei um seine Achse 6 drehen. Die Achse 6 ist durch Teile 6.1 und 6.2 auf einem rotierenden Glied 2 gelagert. Gemäß einer Ausführungsform der vorliegenden Erfindung sind die Blöcke 1 aus leichtgewichtigem Material hergestellt, so daß das Gewicht eines Blocks 1 nicht ausreicht, um die Produkthalter 12 zu veranlassen, die Produkte ohne die zusätzliche, von den Rampen 15, 16 oder 17 erzeugte Kraft freizugeben. Alternativ können die schwenkbaren Blöcke 1 auf ihren Achsen 6 so gelagert sein, daß diese während der Bewegung durch einen horizontalen Bewegungsabschnitt über dem Förderer 10 in einer horizontalen Position verbleiben. Wie für den Fachmann offensichtlich sein würde, könnte dies auf mannigfaltige Weise erzielt werden, z.B. durch Torsionseinwirkung auf die Achsen oder durch Ausbalancieren der Blöcke, wobei Gewichte angebracht und/oder die Position der Achsen reguliert werden könnten.

Die schwenkbaren Blöcke 1, welche durch die wahlweise betätigbaren Rampen 15, 16 und 17 abschwenkbar sind, sind über einem Förderer 10 angeordnet. Der Förderer 10 umfaßt identisch konstruierte Produkthalter 12, welche kontinuierlich in die Förderrichtung 11 transportiert werden. Die Produkthalter 12 können durch einen diesen jeweils zugeordneten Stellmechanismus 13 aktiviert werden. Solch ein Stellmechanismus 13 kann einen verstellbaren Stift 13.1, ein bewegbares Greiferteil 13.2 und einen feststehenden Anschlag 13.3 enthalten. An dem verstellbaren Stift 13.1, welcher durch einen schwenkbaren Block 1 nach unten bewegt werden kann, ist ein bewegbares Greiferteil 13.2 befestigt, das mit dem Stift 13.1 zusammenwirkt. Wenn eine Gruppe schwenkbarer Blöcke 1 durch eine wahlweise betätigbare Rampe aktiviert wird - z.B. durch die Rampe 15 -, dann wird der Kontakt zwischen dem bewegbaren Greiferteil 13.2 und dem feststehenden Anschlag 13.3 durch die Bewegung des verstellbaren Stifts 13.1 unterbrochen, und das ergriffene Produkt wird freigegeben.

Fig. 2 zeigt eine Draufsicht der Freigabeeinheit 14 mit in der Länge sich erstreckenden, wahlweise betätigbaren Rampen 15, 16 und 17. Die rotierenden Glieder 2 sind hier als aus Kettengliedern 3 bestehende Ketten gezeigt. Die Kettenglieder 3 halten Teile 6.1 und 6.2, worauf die Achsen 6 der schwenkbaren Blöcke 1 gelagert sind. Die Blöcke 1, welche auf den jeweiligen Achsen 6 rotierbar gelagert sind, sind in verschiedene Blocktypen aufgeteilt.

Ein erster Blocktyp hat Vorsprünge 19 in der Mitte und erste äußere Vorsprünge 20. In Fig. 2 gehört jeder sechste der schwenkbaren Blöcke 1 zu dem ersten Blocktyp 21. In Transportrichtung gesehen, befindet sich ein schwenkbarer Block des Typs 22 neben einem zur äußeren Linken angeordneten schwenkbaren Block des Typs 21. Dieser zweite Blocktyp 22 hat zweite äußere Vorsprünge 18. Neben dem zweiten Blocktyp 22 befindet sich ein dritter Blocktyp 23, welcher nur erste äußere Vorsprünge hat. Neben diesem dritten Blocktyp 23 befindet sich ein vierter Blocktyp 24 (der vierte Block von links in Fig. 2), welcher mittlere Vorsprünge 19 und zweite äußere Vorsprünge 18 hat.

In Fig. 2 sind die schwenkbaren Blöcke 1 nach Blocktyp in einer Spiegelbildanordnung gruppiert. Mit anderen Worten, die Blöcke sind folgendermaßen angeordnet: Blocktyp 21, Blocktyp 22, Blocktyp 23, Blocktyp 24, Blocktyp 23, Blocktyp 22, Blocktyp 21, Blocktyp 22 usw. entlang dem gesamten Umlaufweg der rotierenden Glieder 2. In Fig. 2 sind unterhalb der verschiedenen Gruppen schwenkbarer Blöcke 21, 22, 23 und 24 die übereinstimmenden verstellbaren Stifte 13.1 der identischen Aktiviermechanismen 13 der Produkthalter 12 in gebrochenen Linien angedeutet.

In Fig. 1 wird die wahlweise betätigbare erste Rampe 15 durch die Aktiviereinheit 8 aktiviert. Somit werden die schwenkbaren Blöcke 1, welche unterhalb der ersten Rampe 15 einen Vorsprung aufweisen, ausgelenkt. Wie in Fig. 2 gezeigt, haben der zweite Blocktyp 22 und der vierte Blocktyp 24 jeweils zweite äußere Vorsprünge 18, die unterhalb der ersten wahlweise betätigbaren Rampe 15 positioniert sind. Somit führt ein Herablassen der ersten wahlweise betätigbaren Rampe 15 zu einer Auslenkung der schwenkbaren Blöcke 22 und 24 und letztendlich zu einem öffnen jedes zweiten Produkthalters 12, wie in Fig. 1 dargestellt.

Das öffnen eines jeden zweiten unterhalb der Freigabeeinheit 14 passierenden Produkthalters 12 kann auch auf einem alternativen Weg verwirklicht werden. Die Betätigung der zweiten wahlweise betätigbaren Rampe 17 verursacht ein Herablassen des ersten Blocktyps 21 und des dritten Blocktyps 23. Diese haben jeweilige erste äußere Vorsprünge 20, die unterhalb der zweiten wahlweise betätigbaren Rampe 17 positioniert sind. In dieser Weise kann auch eine Freigabe eines jeden zweiten der von einem Produkthalter 12 ergriffenen Produkte stattfinden.

Die Betätigung einer dritten wahlweise betätigbaren Rampe 16 bewirkt die Freigabe eines jeden dritten der von den Produkthaltern ergriffenen Produkte. Der erste Blocktyp 21 und der vierte Blocktyp 24 sind jeweils mit einem mittleren Vorsprung 19 versehen, der unterhalb der dritten wahlweise betätigbaren Rampe 16 positioniert ist. Da jeder dritte der schwenkbaren Blöcke an den rotierenden Gliedern 2 einem der beiden Blocktypen 21 und 24 angehört, kann durch die Betätigung der dritten wahlweise betätigbaren Rampe 16 jedes dritte Produkt freigegeben werden.

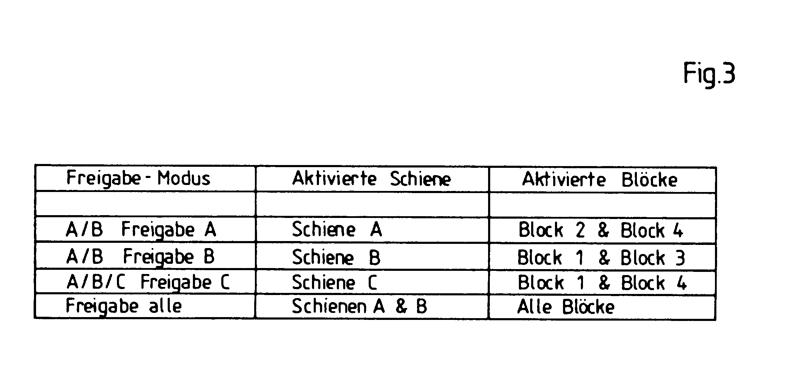

Wenn die erste und die zweite wahlweise betätigbaren Rampen 15 und 17 gleichzeitig aktiviert (d. h. herabgelassen) werden, so werden alle ergriffenen Produkte durch die schwenkbaren Blöcke aller vier Typen 21, 22, 23 und 24 freigegeben. In Fig. 3 sind diese verschiedenen Freigabearten tabellarisch dargestellt.

Die Bewegungsrichtung der rotierenden Glieder 2 der Freigabeeinheit 14 und die Bewegungsrichtung 11 der Produkthalter 12 sind gleich.

### BEZUGSZEICHENLISTE

- 1: schwenkbarer Block
- 2: rotierende Glieder
- 3: Kettenglieder
- 4: Kettenrad
- 5: Kettenrad
- 6: Achsen
- 6.1: Lagerteil
- 6.2: Lagerteil
- 8: Aktiviereinheiten
- 9: Schaltungen
- 10: Förderer
- 11: Förderrichtung
- 12: Produkthalter
- 13: Stellmechanismus
- 13.1: Stift
- 13.2: Greiferteil
- 13.3: Anschlag
- 14: Freigabeeinheit
- 15: Rampe
- 16: Rampe
- 17: Rampe
- 18: zweiter äußerer Vorsprung
- 19: mittlerer Vorsprung
- 20: erster äußerer Vorsprung
- 21: erster Blocktyp
- 22: zweiter Blocktyp
- 23: dritter Blocktyp
- 24: vierter Blocktyp
- 26: Verbindungsstücke

## Patentansprüche

1. Vorrichtung für die Freigabe von auf einem Förderer transportierten Produkten, mit
einer Freigabeeinheit (14) mit rotierenden Gliedern (2), dadurch gekennzeichnet, daß an diesen eine Vielzahl schwenkbarer Blöcke (1) angebracht sind, wobei jeder der schwenkbaren Blöcke (1) einen oder mehrere Vorsprünge (18, 19, 20) aufweist; ein Förderer (10) vorgesehen ist, welcher eine Vielzahl von identischen Produkthaltern (12) vorbei an der Freigabeeinheit (14) transportiert, wobei jeder der Produkthalter (12) einem der schwenkbaren Blöcke (1) zugeordnet ist, während der Förderer (10) die Produkthalter (12) vorbei an der Freigabeeinheit (14) transportiert;
eine Vielzahl von der Freigabeeinheit (14) zugeordneten wahlweise aktivierbaren Rampen (15, 16, 17) vorgesehen sind, wobei jede der wahlweise aktivierbaren Rampen operativ in einem Verhältnis zu den gewählten der Vorsprünge (18, 19, 20) angeordnet ist;
die Aktivierung einer jeden wahlweise aktivierbaren Rampe (15, 16, 17) erfolgt, wodurch die Rampe (15, 16, 17) ihre gewählten Vorsprünge (18, 19, 20) kontaktiert, und wodurch die Blöcke (1) vorbei an den aktivierten Rampen (15, 16, 17) passieren und die Blöcke, welche mit den aktivierten Rampen (15, 16, 17) übereinstimmende Vorsprünge (18, 19, 20) aufweisen, geschwenkt werden, und das Schwenken der Blöcke (1) die zugeordneten Produkthalter (12) veranlaßt, die Produkte freizugeben.

2. Vorrichtung gemäß Anspruch 1,
**dadurch gekennzeichnet,**
daß die wahlweise aktivierbaren Rampen (15, 16, 17) in einem Abstand voneinander angeordnet sind, und zwar senkrecht zu der Bewegungsrichtung (11) des Förderers (10).

3. Vorrichtung gemäß Anspruch 1,
**dadurch gekennzeichnet,**
daß die wahlweise aktivierbaren Rampen (15, 16, 17) in einem Abstand voneinander angeordnet sind, und zwar in der Bewegungsrichtung (11) des Förderers (10).

4. Vorrichtung gemäß Anspruch 1,
**dadurch gekennzeichnet,**
daß jede der wahlweise aktivierbaren Rampen (15, 16, 17) durch mindestens ein Verbindungsstück (26) mit einer Aktiviereinheit (8) verbunden ist.

5. Vorrichtung gemäß Anspruch 1,
**dadurch gekennzeichnet,**
daß die Vielzahl von Blöcken (1) aus einer Vielzahl verschiedener Blocktypen (21, 22, 23, 24) besteht.

6. Vorrichtung gemäß Anspruch 5,
**dadurch gekennzeichnet,**
daß ein erster Blocktyp (21) der Vielzahl verschiedener Blocktypen einen mittleren Vorsprung (19) und einen ersten äußeren Vorsprung (20) aufweist.

7. Vorrichtung gemäß Anspruch 5,
**dadurch gekennzeichnet**,
daß ein zweiter Blocktyp (22) der Vielzahl verschiedener Blocktypen einen zweiten äußeren Vorsprung (18) aufweist.

8. Vorrichtung gemäß Anspruch 5,
**dadurch gekennzeichnet,**
daß ein dritter Blocktyp (23) der Vielzahl verschiedener Blocktypen einen ersten äußeren Vorsprung (20) aufweist.

9. Vorrichtung gemäß Anspruch 5,
**dadurch gekennzeichnet,**
daß ein vierter Blocktyp (24) der Vielzahl verschiedener Blocktypen einen mittleren Vorsprung (19) und einen zweiten äußeren Vorsprung (18) aufweist.

10. Vorrichtung gemäß Anspruch 5,
**dadurch gekennzeichnet,**
daß ein erster Blocktyp (21) und ein dritter Blocktyp (23) der Vielzahl verschiedener Blocktypen jeweils einen ersten äußeren Vorsprung (20) aufweist; und daß eine erste äußere wahlweise aktivierbare Rampe (15) der Vielzahl wahlweise aktivierbarer Rampen operativ in einem Verhältnis zu den ersten äußeren Vorsprüngen (20) angeordnet ist.

11. Vorrichtung gemäß Anspruch 5,
**dadurch gekennzeichnet,**
daß ein erster Blocktyp (21) und ein vierter Blocktyp (24) der Vielzahl verschiedener Blocktypen jeweils einen mittleren Vorsprung (19) aufweist; und daß eine mittlere wahlweise aktivierbare Rampe (16) der Vielzahl aktivierbarer Rampen operativ in einem Verhältnis zu den mittleren Vorsprüngen (19) angeordnet ist.

12. Vorrichtung gemäß Anspruch 5,
**dadurch gekennzeichnet,**
daß ein zweiter Blocktyp (21) und ein vierter Blocktyp (24) der Vielzahl verschiedener Blocktypen jeweils einen zweiten äußeren Vorsprung (18) aufweist; und daß eine zweite äußere wahlweise aktivierbare Rampe (17) der Vielzahl aktivierbarer Rampen operativ in einem Verhältnis zu den zweiten äußeren Vorsprüngen (18) angeordnet ist.

13. Vorrichtung gemäß Anspruch 10,
**dadurch gekennzeichnet**,
daß jeder zweite der Vielzahl von Blöcken (1) einer des ersten und des genannten dritten Blocktyps (21, 23) ist, so daß eine Aktivierung der ersten äußeren wahlweise aktivierbaren Rampe (15) die Freigabe eines Falzprodukts von jedem zweiten der Produkthalter (12) bewirkt.

14. Vorrichtung gemäß Anspruch 11,
**dadurch gekennzeichnet**,
daß jeder zweite der Vielzahl von Blöcken (1) einer des genannten zweiten und des vierten Blocktyps (22, 24) ist, so daß eine Aktivierung der zweiten äußeren wahlweise aktivierbaren Rampe (17) die Freigabe eines Falzprodukts von anderen zweiten der Produkthalter (12) bewirkt.

15. Vorrichtung gemäß Anspruch 12,
**dadurch gekennzeichnet**,
daß jeder dritte der Vielzahl von Blöcken (1) einer des ersten und des vierten Blocktyps (21, 24) ist, so daß eine Aktivierung der mittleren wahlweise aktivierbaren Rampe (16) die Freigabe eines Falzprodukts von jedem dritten der Produkthalter (12) bewirkt.

16. Vorrichtung gemäß Anspruch 5,
**dadurch gekennzeichnet**,
daß ein erster Blocktyp (21) und ein dritter Blocktyp (23) der Vielzahl verschiedener Blocktypen einen ersten äußeren Vorsprung (20) aufweisen und jeder Block (1) von ungerader Zahl einer des ersten und dritten Blocktyps (21, 23) ist;
daß ein zweiter Blocktyp (22) und ein vierter Blocktyp (24) der Vielzahl verschiedener Blocktypen einen zweiten äußeren Vorsprung (18) aufweisen und jeder Block (1) von gerader Zahl einer des zweiten und vierten Blocktyps (22, 24) ist;
daß eine erste äußere wahlweise aktivierbare Rampe (15) der Vielzahl von wahlweise aktivierbaren Rampen operativ in einem Verhältnis zu den ersten äußeren Vorsprüngen (20) angeordnet ist;
daß eine zweite äußere wahlweise aktivierbare Rampe (17) der Vielzahl von wahlweise aktivierbaren Rampen operativ in einem Verhältnis zu den zweiten äußeren Vorsprüngen (18) angeordnet ist;
daß die Aktivierung der beiden ersten und zweiten äußeren wahlweise aktivierbaren Rampen (15, 17) eine Freigabe des Falzprodukts von jedem der Produkthalter (12) bewirkt; und
daß die Aktivierung nur einer der ersten und zweiten äußeren wahlweise aktivierbaren Rampen (15, 17) die Freigabe eines Falzprodukts von jedem zweiten der Produkthalter (12) bewirkt.

17. Vorrichtung gemäß Anspruch 16,
**dadurch gekennzeichnet**,
daß ein erster Blocktyp (21) und ein vierter Blocktyp (24) der Vielzahl verschiedener Blocktypen jeweils einen mittleren Vorsprung (19) aufweist und jeder dritte Block (1) einer des ersten und vierten Blocktyps (21, 24) ist;
daß eine mittlere wahlweise aktivierbare Rampe (16) der Vielzahl der wahlweise aktivierbaren Rampen operativ in einem Verhältnis zu den mittleren Vorsprüngen (19) angeordnet ist; und
daß die Aktivierung der mittleren wahlweise aktivierbaren Rampe (16) die Freigabe eines Falzprodukts von jedem dritten der Produkthalter (12) bewirkt.

## Claims

1. Device for the release of products transported on a conveyor with a release unit (14) with rotating members (2),
**characterized in**
that a plurality of swivellable blocks (1) is arranged at the rotating members (2), each of the swivellable blocks (1) comprising one or more tabs (18, 19, 20);
that a conveyor (10) is provided which transports a plurality of identical product holders (12) past the release unit (14), each of the product holders (12) being associated with one of the swivellable blocks (1) while the conveyor transports the product holders (12) past the release unit (14);
that a plurality of selectively operable ramps (15, 16, 17) associated with the release unit (14) is provided, each of the selectively operable ramps being arranged in an operative relationship with the selected ones of the tabs (18, 19, 20);
that actuation of each of the selectively operable ramps (15, 16, 17) is performed, whereby the ramp (15, 16, 17) contacts the selected tabs (18, 19, 20) and whereby the blocks (1) pass the actuated ramps (15, 16, 17) and the blocks that have tabs (18, 19, 20) corresponding to the actuated ramps (15, 16, 17) are swivelled, thus causing the associated product holders (12) to release the products.

2. Device according to Claim 1,
**characterized in**
that the selectively operable ramps (15, 16, 17) are arranged in a distance to one another and perpendicular with the direction of movement (11) of the conveyor (10).

3. Device according to Claim 1,
**characterized in**
that the selectively operable ramps (15, 16, 17) are arranged at a distance from one another and in the direction of movement (11) of the conveyor (10).

4. Device according to Claim 1,
**characterized in**
that each of the selectively operable ramps (15, 16, 17) is connected with an actuating unit (8) by means of at least one connecting piece (26).

5. Device according to Claim 1,
**characterized in**
that the plurality of blocks (1) consists of a plurality of different block types (21, 22, 23, 24).

6. Device according to Claim 5,
**characterized in**
that a first block type (21) of the plurality of different block types comprises a centre tab (19) and a first outer tab (20).

7. Device according to Claim 5,
**characterized in**
that a second block type (22) of the plurality of different block types comprises a second outer tab (18).

8. Device according to Claim 5,
**characterized in**
that a third block type (23) of the plurality of different block types comprises a first outer tab (20).

9. Device according to Claim 5,
**characterized in**
that a fourth block type (24) of the plurality of different block types comprises a centre tab (19) and a second outer tab (18).

10. Device according to Claim 5,
**characterized in**
that a first block type (21) and a third block type (23) of the plurality of different block types each comprise a first outer tab (20); and
that a first outer one (15) of the plurality of selectively operable ramps is arranged in an operative relationship with the first outer tabs (20).

11. Device according to Claim 5,
**characterized in**
that a first block type (21) and a fourth block type (24) of the plurality of different block types each comprise a centre tab (19); and
that a central one (16) of the plurality of selectively operable ramps is arranged in an operative relationship with the centre tabs (19).

12. Device according to Claim 5,
**characterized in**
that a second block type (21) and a fourth block type (24) of the plurality of different block types each comprise a second outer tab (18); and
that a second outer one (17) of the plurality of selectively operable ramps is arranged in an operative relationship with the second outer tabs (18).

13. Device according to Claim 10,
**characterized in**
that every second block of the plurality of blocks (1) is a block of the first and the mentioned third block type (21, 23) so that actuation of the first outer selectively operable ramp (15) causes the folded product of every second product holder (12) to be released.

14. Device according to Claim 11,
**characterized in**
that each second block of the plurality of blocks (1) is a block of the mentioned second and fourth block type (22, 24), so that actuation of the second outer selectively operable ramp (17) causes the folded products of different second ones of the product holders (12) to be released.

15. Device according to Claim 12,
**characterized in**
that every third block of the plurality of blocks (1) is a block of the first and fourth block type (21, 24), so that actuation of the central selectively operable ramp (16) causes the folded product of every third product holder (12) to be released.

16. Device according to Claim 5,
**characterized in**
that a first block type (21) and a third block type (23) of the plurality of different block types comprise a first outer tab (20), each block (1) of an uneven number being one of the first and third block type (21, 23);
that a second block type (22) and a fourth block type (24) of the plurality of different block types comprise a second outer tab (18), each block (1) of an even number being one of the second and fourth block type (22, 24);
that a first outer selectively operable ramp (15) of the plurality of selectively operable ramps is arranged in an operative relationship with the first outer tabs (20);
that a second outer selectively operable ramp (17) of the plurality of selectively operable ramps is arranged in an operative relationship with the second outer tabs (18);
that actuation of the two first and second outer selectively operable ramps (15, 17) causes the folded product of each of the product holders (12) to be released; and that actuation of only one of the first and second outer selectively operable ramps (15, 17) causes the folded product of every second product holder (12) to be released.

17. Device according to Claim 16,
**characterized in**
that a first block type (21) and a fourth block type (24) of the plurality of different block types each comprise a centre tab (19) and that every third block (1) is one of the first and fourth block type (21, 24);
that a central selectively operable ramp (16) of the plurality of selectively operable ramps is arranged in an operative relationship with the central tabs (19); and that actuation of the central selectively operable ramp (16) causes the folded product of every third product holder (12) to be released.

## Revendications

1. Dispositif pour relâcher des produits transportés sur un transporteur, comprenant
une unité de relâchement (14) munie d'organes tournants (2),
caractérisé en ce qu'à ces organes sont reliés une pluralité de blocs pivotants (1), chacun des blocs pivotants (1) présentant une ou plusieurs saillie(s) (18, 19, 20) ;
il est prévu un transporteur (10) qui fait passer une pluralité de supports de produit identiques (12) au droit de l'unité de relâchement (14), chacun des supports de produit (12) étant associé à un des blocs pivotants (1), pendant que le transporteur (10) fait passer les supports de produit (12) au droit de l'unité de relâchement (14) ;
il est prévu une pluralité de rampes sélectivement activables (15, 16, 17) associées à l'unité de relâchement (14), chacune des rampes sélectivement activables étant en relation fonctionnelle avec celles des saillies (18, 19, 20) qui ont été sélectionnées ;
l'activation de chaque rampe sélectivement activable (15, 16, 17) s'effectue, de sorte que la rampe (15, 16, 17) entre en contact avec ses saillies sélectionnées (18, 19, 20) et de sorte que les blocs (1) passent au droit des rampes (15, 16, 17) activées et que les blocs qui présentent des saillies (18, 19, 20) correspondant aux rampes (15, 16, 17) activées pivotent et que le pivotement des blocs (1) amène les supports de produit (12) qui leur sont associés à relâcher les produits.

2. Dispositif selon la revendication 1,
caractérisé
en ce que les rampes sélectivement activables (15, 16, 17) sont disposées à un certain espacement mutuel, ceci dans la direction perpendiculaire à la direction (11) du mouvement du transporteur (10).

3. Dispositif selon la revendication 1,
caractérisé
en ce que les rampes sélectivement activables (15, 16, 17) sont disposées à un certain espacement mutuel, ceci dans la direction (11) du mouvement du transporteur (10).

4. Dispositif selon la revendication 1,
caractérisé
en ce que chacune des rampes sélectivement activables (15, 16, 17) est reliée à une unité d'activation (8) par au moins un élément de liaison (26).

5. Dispositif selon la revendication 1,
caractérisé
en ce que la pluralité de blocs (1) est constituée par une pluralité de différents types de blocs (21, 22, 23, 24).

6. Dispositif selon la revendication 5,
caractérisé
en ce qu'un premier type de blocs (21) de la pluralité de différents types de blocs présente une saillie centrale (19) et une première saillie extérieure (20).

7. Dispositif selon la revendication 5,
caractérisé
en ce qu'un deuxième type de blocs (22) de la pluralité de différents types de blocs présente une deuxième saillie extérieure (18).

8. Dispositif selon la revendication 5,
caractérisé
en ce qu'un troisième type de blocs (23) de la pluralité de différents types de blocs présente une première saillie extérieure (20).

9. Dispositif selon la revendication 5,
caractérisé
en ce qu'un quatrième type de blocs (24) de la pluralité de différents types de blocs présente une saillie centrale (19) et une deuxième saillie extérieure (18).

10. Dispositif selon la revendication 5,
caractérisé
en ce qu'un premier type de blocs (21) et un troisième type de blocs (23) de la pluralité de différents types de blocs présentent chacun une première saillie extérieure (20) ; et en ce qu'une première rampe extérieure sélectivement activable (15) de la pluralité de rampes sélectivement activables est disposée en relation fonctionnelle avec les premières saillies extérieures (20).

11. Dispositif selon la revendication 5,
caractérisé
en ce qu'un premier type de blocs (21) et un quatrième type de blocs (24) de la pluralité de différents types de blocs présentent chacun une saillie centrale (19) ; et en ce qu'une rampe centrale sélectivement activable (16) de la pluralité de rampes activables est disposée en relation fonctionnelle avec les saillies centrales (19).

12. Dispositif selon la revendication 5,
caractérisé
en ce qu'un deuxième type de blocs (21) et un quatrième type de blocs (24) de la pluralité de différents types de blocs présentent chacun une deuxième saillie extérieure (18) et en ce qu'une deuxième rampe extérieure sélectivement activable (17) de la pluralité de rampes activables est disposée en relation fonctionnelle avec les deuxièmes saillies extérieures (18).

13. Dispositif selon la revendication 10,
caractérisé
en ce qu'un sur deux des blocs de la pluralité de blocs (1) est un bloc du premier ou du troisième type de blocs précité (21, 23), de sorte qu'une activation de la première rampe extérieure sélectivement activable (15) détermine le relâchement d'un produit plié d'un sur deux des supports de produit (12).

14. Dispositif selon la revendication 11,
caractérisé
en ce qu'un sur deux des blocs de la pluralité de blocs (1) est un bloc du deuxième ou du quatrième type de blocs précités (22, 24), de sorte qu'une activation de la deuxième rampe extérieure sélectivement activable (17) détermine le relâchement d'un produit plié de l'autre des un sur deux des supports de produit (12).

15. Dispositif selon la revendication 12,
caractérisé
en ce qu'un sur trois des blocs de la pluralité de blocs (1) est un bloc du premier ou du quatrième type de blocs (21, 24), de sorte qu'une activation de la rampe centrale sélectivement activable (16) détermine le relâchement d'un produit plié d'un sur trois des supports de produit (12).

16. Dispositif selon la revendication 5,
caractérisé
en ce qu'un premier type de blocs (21) et un troisième type de blocs (23) de la pluralité de différents types de blocs présentent une première saillie extérieure (20) et chaque bloc (1) de rang impair est un bloc du premier ou du troisième type de blocs (21, 23) ;
en ce qu'un deuxième type de blocs (22) et un quatrième type de blocs (24) de la pluralité de différents types de blocs présentent une deuxième saillie extérieure (18) et chaque bloc (1) de rang pair est un bloc du deuxième ou quatrième type de blocs (22, 24) ;
en ce qu'une première rampe extérieure sélectivement activable (15) de la pluralité de rampes sélectivement activables est disposée en relation fonctionnelle avec les premières saillies extérieures (20) ;
en ce qu'une deuxième rampe extérieure sélectivement activable (17) de la pluralité de rampes sélectivement activables est disposée en relation fonctionnelle avec les deuxièmes saillies extérieures (18) ;
en ce que l'activation des deux première et deuxième rampes extérieures sélectivement activables (15, 17) détermine un relâchement du produit plié de chacun des supports de produit (12) ; et
en ce que l'activation d'une seule des première et deuxième rampes extérieures sélectivement activables (15, 17) détermine le relâchement d'un produit plié d'un sur deux des supports de produit (12).

17. Dispositif selon la revendication 16,
caractérisé
en ce qu'un premier type de blocs (21) et un quatrième type de blocs (24) de la pluralité de différents types de blocs présentent chacun une saillie centrale (19) et qu'un sur trois des blocs (1) est un bloc du premier ou du quatrième type de blocs (21, 24) ;
en ce qu'une rampe centrale sélectivement activable (16) de la pluralité de rampes sélectivement activables est disposée en relation fonctionnelle avec les saillies centrales (19) ; et
en ce que l'activation de la rampe centrale sélectivement activable (16) détermine le relâchement d'un produit plié d'un sur trois des supports de produit (12).
